# FASCICULE DE BREVET EUROPEEN

(11) **EP 1 097 663 B1**
(45) Date de publication et mention de la délivrance du brevet: **13.07.2005**
(21) Numéro de dépôt: 99121661.5
(22) Date de dépôt: 02.11.1999
(51) Int. Cl.: A47J 31/46, A47J 31/54

(54) **Dispositif et procédé de chauffage en continu d'un liquide à une température constante**
Vorrichtung und Verfahren für Durchlauferhitzung eines Getränkes mit konstanter Temperatur
Device and method for continuous heating of liquids at a constant temperature

(43) Date de publication de la demande: 09.05.2001
(73) Titulaire: SOCIETE DES PRODUITS NESTLE S.A., 1800 Vevey (CH)
(72) Inventeur: Beaulieu, Alain, 06220 Vallauris (FR)
(74) Mandataire: Borne, Patrice Daniel

(56) Documents cités:
- EP-A- 0 540 440
- EP-A- 0 862 883
- DE-B- 2 635 046
- FR-A- 2 774 882
- GB-A- 2 113 813

## Description

La présente invention a pour objet un dispositif et un procédé de chauffage en continu d'un liquide à une température constante. Une application particulière de ce dispositif peut être le chauffage à une température constante et précise pour permettre par exemple la réalisation de préparations alimentaires. -

En particulier, ce dispositif et ce procédé peuvent être utilisés avantageusement pour le chauffage de l'eau sous pression destinée à la préparation de café.

Pour la préparation de café on connaît des dispositifs de chauffage d'eau discontinus dans lesquels une quantité d'eau déterminée est chauffée, puis utilisée à l'aide d'une pompe pour la préparation du café. Dans de tels dispositifs, le volume d'eau disponible est limité, le temps de préchauffage est important et une attente entre chaque préparation de café est inévitable. De plus, ces dispositifs sont encombrants et onéreux.

Il existe également des dispositifs de chauffage d'eau en continu, l'eau étant chauffée lors de son passage dans un canal ou une tubulure noyée dans un bloc à forte capacité thermique pour garantir une température constante. Le volume d'eau utilisable est limité par la capacité thermique du bloc, par ailleurs les dispositifs nécessaires pour réguler l'alimentation électrique et/ou la quantité d'eau délivrée ne permettent pas d'atteindre une précision de la température suffisante avec des moyens économiques. Ici également, le temps de préchauffe est long.

De tels dispositifs de chauffage en continu d'eau pour la production de café sont connus par exemple des documents suivants : EP 0 307 955, EP 0 676 163, EP 0 771 542 ou FR 2 683 135. Le document FR-A-2 774 882 décrit un dispositif de chauffage selon le préamble de la revendication indépendante 1.

Le but de la présente invention est de permettre la réalisation d'un dispositif de chauffage en continu d'un liquide à une température constante qui soit à la fois économique, précis en ce qui concerne la température de sortie du liquide, dont le corps de chauffe ne nécessite pas une grande inertie thermique et ne nécessitant donc pas un long temps de préchauffage.

La présente invention a pour objet un dispositif et un procédé de chauffage d'un liquide en continu à une température constante obviant aux inconvénients des dispositifs connus et permettant de réaliser les buts précités et pour ce faire le dispositif selon l'invention comporte les caractéristiques énumérées à la revendication 1 et le procédé celles énumérées à la revendication 15.

Le dessin annexé illustre schématiquement et à titre d'exemple une forme d'exécution du dispositif de chauffage selon l'invention.

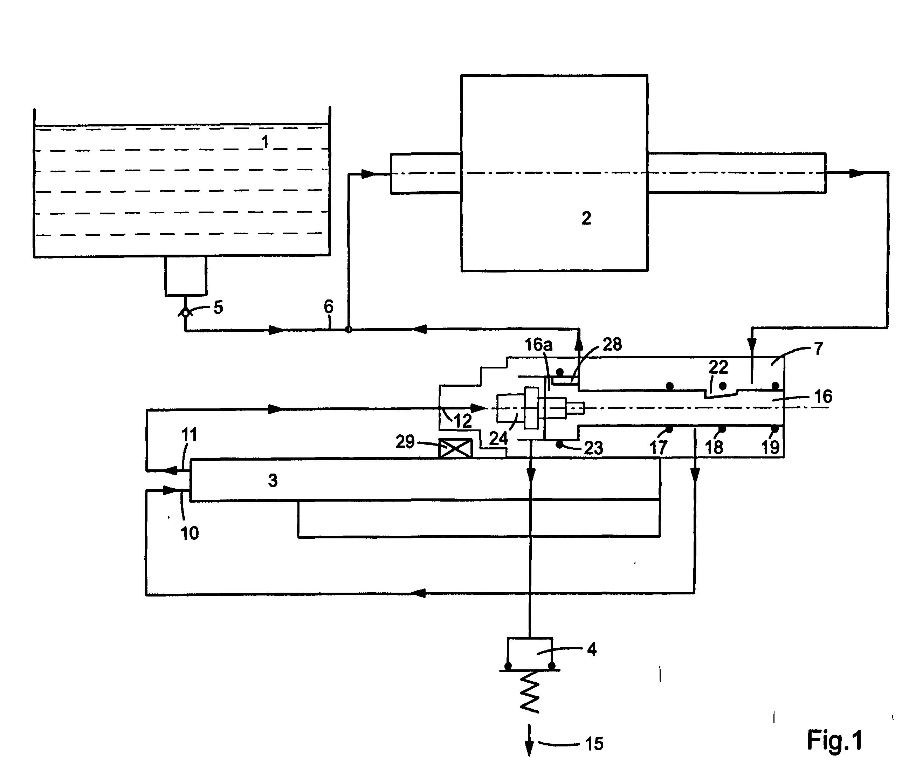

La figure 1 est un schéma bloc du dispositif de chauffage en continu.
La figure 2 est une coupe longitudinale d'un dispositif de régulation de débit et de recyclage d'eau.
La figure 3 est une coupe partielle à plus grande échelle du régulateur de débit.
Les figures 4, 5 et 6 illustrent à plus grande échelle trois positions différentes du régulateur de débit en fonction de la température de l'eau.
La figure 7 illustre la relation entre le débit et la pression d'eau en fonction de la position du régulateur de débit et donc de la température de l'eau.
La figure 8 illustre deux variantes d'un détail du régulateur de débit.
La figure 9 est une coupe à plus grande échelle du dispositif de recyclage.
Les figures 10, 11 et 12 illustrent différentes positions du dispositif de recyclage d'eau en fonction de la température de cette eau.
La figure 13 est un diagramme illustrant la course de l'élément thermostatique du dispositif de régulation du débit et de recyclage en fonction de la température de l'eau sortant du corps de chauffe.

Le dispositif de chauffage en continu d'un liquide à température constante selon le mode d'exécution illustré à titre d'exemple au dessin comporte un réservoir d'eau à température ambiante 1, une pompe 2 aspirant de l'eau ou du liquide contenu dans le réservoir 1, un corps de chauffe 3 traversé par l'eau ou le liquide pompé et comportant une sortie d'utilisation munie d'une soupape 4.

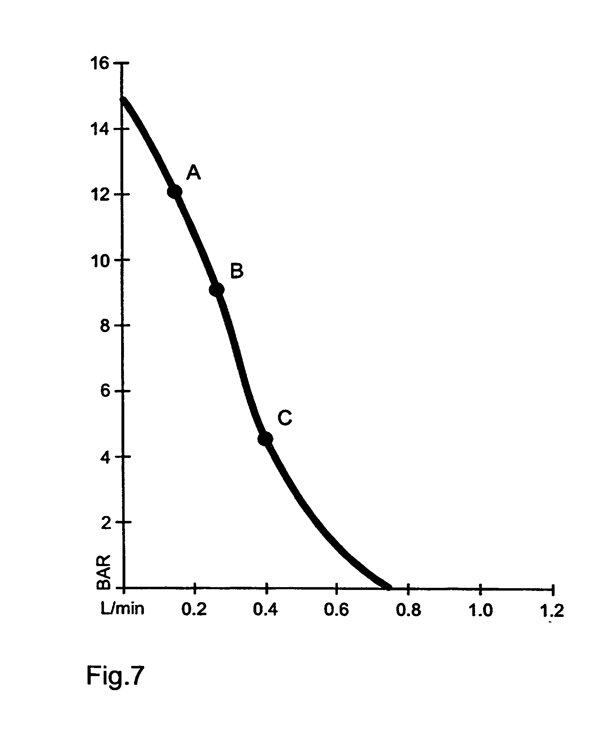

La pompe à eau froide 2 comporte des caractéristiques adaptées à l'utilisation désirée, par exemple la préparation de café, notamment en ce qui concerne ses caractéristiques "Pression-Débit". Cette pompe peut être par exemple de type électromécanique et présenter des caractéristiques semblables à celles représentées à la figure 7.

Le réservoir 1 est équipé d'un clapet de non retour 5 évitant tout retour d'eau ou de liquide dans le réservoir 1 par la canalisation 6 le reliant à la pompe 2.

Le corps de chauffe 3 dispose d'une puissance adaptée au débit nominal du liquide à chauffer et peut être constitué d'un tube d'eau ou de liquide relié thermiquement à une résistance électrique. L'ensemble est réalisé d'une seule pièce ou par assemblage ou liaison des deux tubes, l'un servant de conduit au liquide et l'autre logeant la résistance électrique et présente une faible capacité calorifique. La longueur des tubes et leur diamètre sont principalement dépendant du débit de liquide et de la puissance désirée. De tels corps de chauffe existent et sont disponibles sur le marché. La section du tube d'eau est adaptée au débit nominal du dispositif de chauffage en continu et peut être réalisé en divers matériaux, notamment en acier inoxydable et éventuellement être traité pour limiter son entartrage.

Le dispositif de chauffage en continu illustré comporte encore un dispositif de régulation du débit d'eau et de recyclage de l'eau ou du liquide lorsque celui-ci n'a pas atteint sa température de consigne.

Cet ensemble régulateur de débit-recycleur 7 comporte une partie froide 7a contenant le régulateur de débit et une partie chaude 7b contenant un régulateur thermostatique et le recycleur d'eau. La partie chaude de cet ensemble régulateur de débit-recycleur est de préférence fixée ou montée sur le corps de chauffe 3. Cet ensemble régulateur de débit-recycleur 7 est alimenté en eau froide par la pompe 2 par l'entrée 8 de sa partie froide pour alimenter le régulateur de débit dont la sortie 9 alimente l'entrée 10 du corps de chauffe 3. La sortie 11 du corps de chauffe est reliée à l'entrée 12 de la partie chaude 7b de cet ensemble 7. Cette partie chaude 7b de l'ensemble 7 comporte deux sorties, l'une d'utilisation 13 de l'eau chaude et l'autre de recyclage 14 de l'eau n'ayant pas encore atteint sa température de consigne.

La sortie d'utilisation 13 est reliée par la soupape 4 à un percolateur 15 pour la préparation de café par exemple ou à tout autre appareil d'utilisation du liquide chauffé.

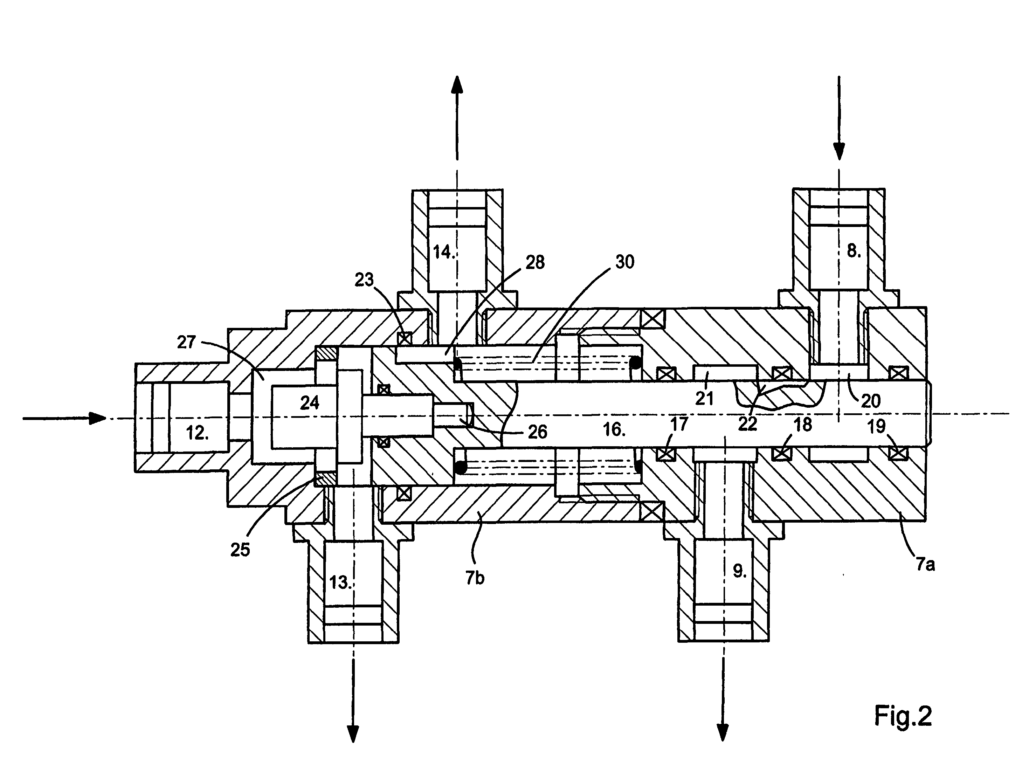

L'ensemble régulateur de débit-recycleur 7 est illustré de façon plus détaillée aux figures 2 à 12 et comporte un corps en deux parties 7a, 7b cylindriques montées bout à bout axialement l'une sur l'autre mais isolées thermiquement l'une par rapport à l'autre.

La partie froide 7a, contenant le régulateur de débit, comporte un alésage central, axial, recevant une tige de réglage 16 coulissant dans cet alésage grâce à des joints d'étanchéité 17, 18, 19. Cette partie froide 7a de l'ensemble 7 comporte une chambre d'entrée d'eau 20, annulaire et située entre les joints d'étanchéité 18 et 19, en liaison directe avec l'entrée d'eau froide 8 alimentée par la pompe 2. Cette partie froide 7a de ensemble 7 comporte encore une chambre de sortie d'eau 21, annulaire et située entre les joints d'étanchéité 17 et 18, en liaison directe avec la sortie 9 alimentant le corps de chauffe en eau froide.

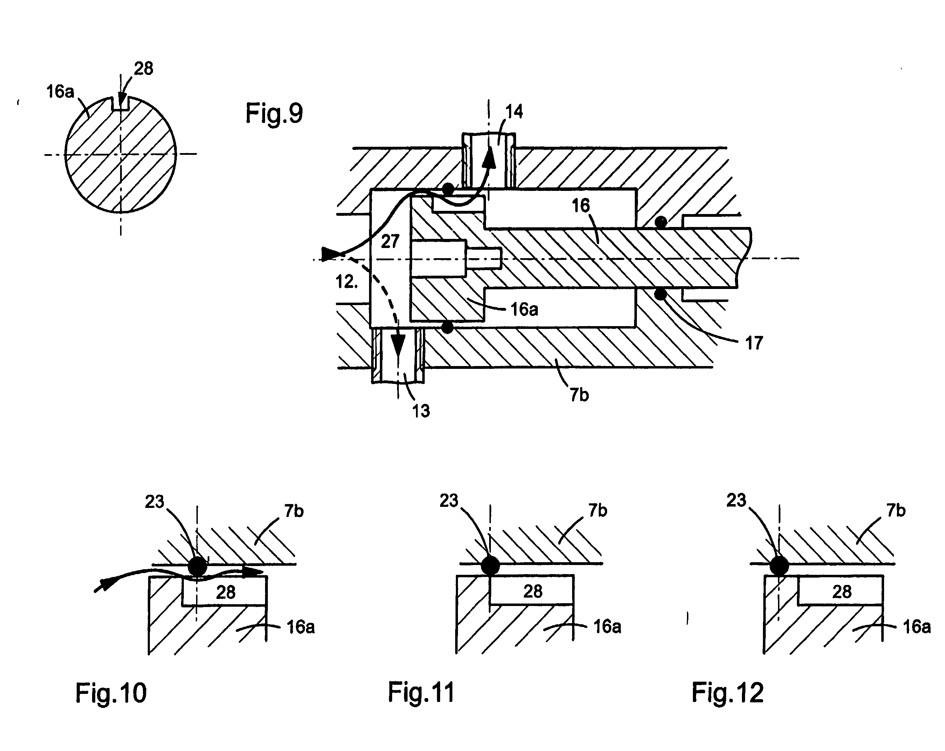

Le régulateur de débit est constitué par un ajutage dont la section de passage de l'eau est variable en fonction de la position axiale de la tige 16. Cet ajutage est formé par une fente radiale 22 pratiquée dans la tige 16 et débouchant sur sa périphérie permettant de relier la chambre d'entrée 20 à la chambre de sortie 21 de la partie froide 7a de l'ensemble 7 suivant la position axiale de la tige 16 par un canal de section minimale jusqu'à une section maximale. Comme on le voit à la figure 8, la forme de cette rainure radiale 22 peut présenter une pente continue ou en escalier. On peut ainsi en choisissant la forme de la section de la rainure 22 définir la fonction selon laquelle le débit d'eau varie en fonction des déplacements axiaux de la tige 16 dans le corps 7a.

La partie chaude 7b de l'ensemble 7 comporte un alésage de plus grand diamètre que celui de la partie froide 7a dans lequel coulisse la tête 16a de la tige 16 à l'aide d'un joint d'étanchéité 23. Un élément thermostatique 24 est fixé à l'aide d'une bague 25 sur le corps 7b de l'ensemble 7. Le piston mobile 26 de cet élément thermostatique 24 prend appui au fond de l'alésage prévu dans la tête 16a de la tige 16.

Cette partie chaude 7b de l'ensemble 7 comporte une première chambre 27 alimentée en eau chaude par l'entrée 12 de la partie chaude alimentée par la sortie 11 du corps de chauffe 3. Cette première chambre 27 est reliée directement à la sortie 13 de cette partie chaude alimentant la soupape 4 et le percolateur 15.

La surface périphérique de la tête 16a de la tige 16 présente une fraisure 28 radiale sur une partie de sa longueur de telle sorte que la première chambre 27 puisse être reliée, suivant la position de la tige 16, avec la sortie de recyclage 14 de l'ensemble 7. Cette sortie de recyclage 14 est reliée au conduit 6 reliant le réservoir 1 à la pompe 2.

Un ressort 30 tend à maintenir la tige 16 dans une position de repos, déplacée en direction de la partie chaude 7a, position pour laquelle le débit d'eau froide régulé par l'ajutage 22 est minimum et pour laquelle la sortie de recyclage d'eau 14 est reliée à la première chambre 27 de la partie chaude 7b de l'ensemble 7.

Le régulateur de débit et le recycleur sont actionnés par la tige 16, elle-même soumise à l'action de l'élément thermosensible 24. Cet élément thermosensible 24 peut être du type à cartouche à cire, à vaporisation de liquide, à métal, à mémoire de forme et à métaux à forte dilatation par exemple.

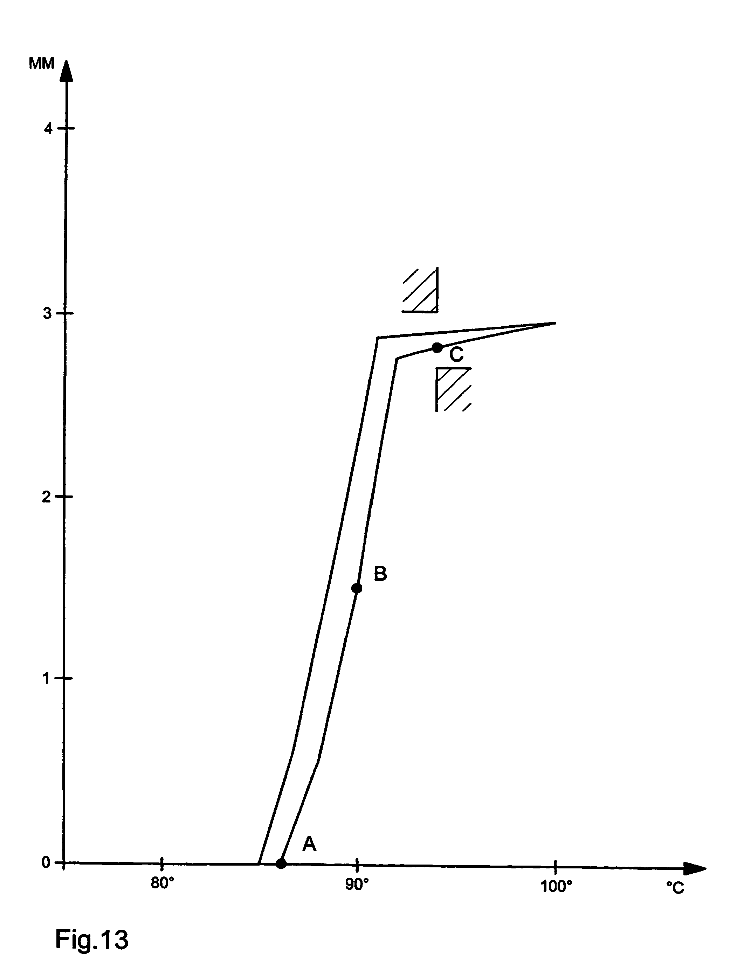

La caractéristique recherchée dans cette application est principalement sa capacité à produire un déplacement sous contrainte, pour une température précise. Les critères d'hystérésis, de fidélité, de rapidité et de coût font que les éléments à cartouche à cire conviennent particulièrement à l'utilisation qui en est faite dans ce dispositif de régulation de débit et de recyclage d'eau. La caractéristique d'un tel élément thermostatique à cartouche de cire est illustrée à titre d'exemple à la figure 13.

Le fonctionnement du dispositif de chauffage en continu décrit est le suivant:

En position d'arrêt, la tige 16 est en position de repos, déplacée vers la gauche sous l'action du ressort 30 de sorte que la chambre d'entrée d'eau froide 20 est reliée à la chambre de sortie 21 du régulateur de débit par une faible section de l'ajutage 22. Le débit d'eau froide est donc faible. Toujours dans cette position de repos, la première chambre 27 de la partie chaude 7b est reliée par la fraisure 28 à la sortie de recyclage 14 de la partie chaude 7b.

Lorsque l'usager enclenche le dispositif de chauffage, il met sous tension le corps de chauffe 3. La faible inertie thermique de ce corps de chauffe permet une montée en température rapide. Lorsque la température de préchauffage est atteinte, un contacteur thermostatique 29 fixé sur le corps de chauffe met en marche, automatiquement ou manuellement, la pompe à eau 2. La pompe alimente ainsi le corps de chauffe 3 en eau froide, avec un faible débit, le régulateur de débit étant en position de débit minimum. L'eau sortant du corps de chauffe est introduite dans la première chambre 27 du recycleur et sensibilise l'élément thermostatique 24. Tant que la température de fonctionnement n'est pas atteinte, le déplacement de la tige 16 sous l'effet de l'élément thermostatique est insuffisant pour isoler la chambre 27 de la sortie de recyclage 14 et toute l'eau pompée est recyclée à l'entrée de la pompe 2, mélangée à de l'eau froide. En effet, tant qu'une pression suffisante ne s'établit pas dans la chambre 27, pression supérieure à la force de retenue de la soupape 4, l'eau ne peut pas être distribuée au percolateur.

Au fur et à mesure que la température de l'eau arrivant dans la chambre 27 augmente, la tige 16 se déplace vers la droite, augmentant la section de passage de l'ajutage 22 et diminuant celle de l'ajutage 28.

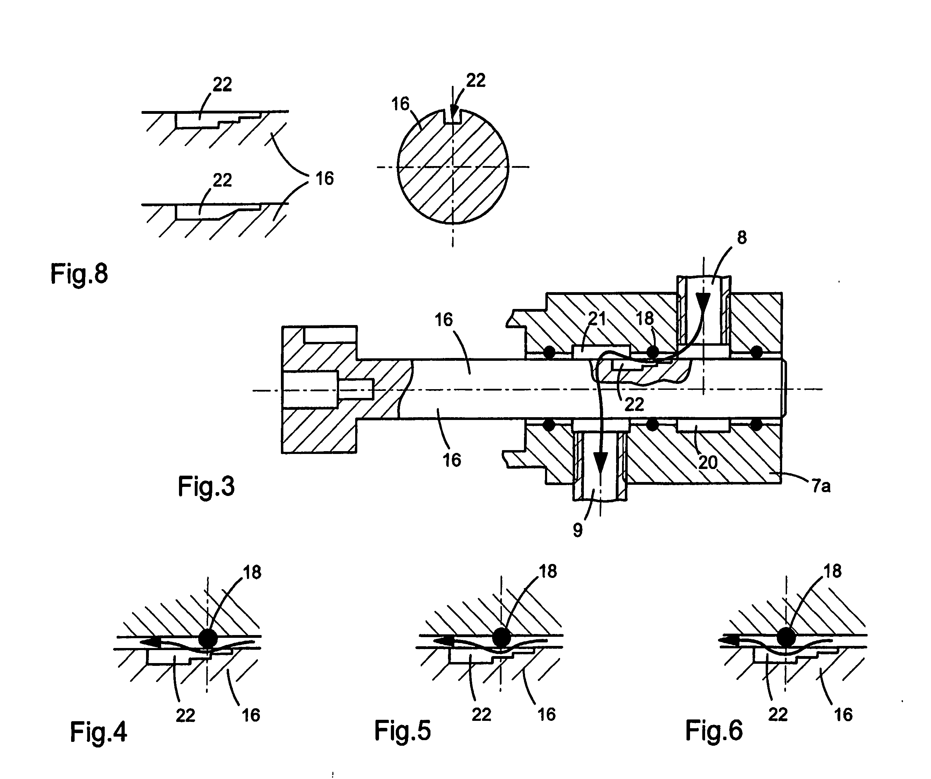

Ainsi, à titre d'exemple, pour une température de l'eau dans la première chambre 27 de la partie chaude 7b inférieure ou égale à 86°C, le régulateur de débit est en position illustrée à la figure 4 et le recycleur en position illustrée à la figure 10 et le point de fonctionnement est celui en A des figures 7 et 13.

Au-delà de la température minimale désirée pour l'eau d'utilisation, le piston 26 de l'élément thermosensible 24 déplace la tige 16 augmentant le débit d'eau froide jusqu'à sa valeur nominale et diminue la section de l'ajutage de recyclage 28. A la température nominale, par exemple 90°, la position des ajutages 22 et 28 sont illustrés aux figures 5 et 11 et le point de fonctionnement correspond au point B des figures 7 et 13. L'ajutage de recyclage 28 est obturé, la pression monte dans la chambre 27 et dépasse la force de retenue de la soupape 4 et le percolateur est alimenté.

Si la température dépasse cette valeur nominale, la tige 16 poursuit sa course vers la droite et l'ajutage 22 augmente encore sa section et le débit devient très supérieur au débit nominal (figures 6, 12) et le point de fonctionnement se situe en C (figures 7 et 13) de sorte que, automatiquement, la température de l'eau arrivant dans la chambre 27 diminue, le corps de chauffe ne suffisant plus à chauffer à la température voulue un débit d'eau sensiblement plus grand que le débit nominal pour lequel il est prévu. Ainsi, la tige 16 se déplace vers la gauche, réduisant à nouveau le débit d'eau froide.

Tant que le dispositif de chauffage débite de l'eau chaude, la température de l'eau de sortie est ainsi automatiquement régulée à sa valeur nominale d'utilisation désirée.

Lorsque l'utilisateur déclenche le dispositif de chauffage, la pompe 2 et le corps de chauffe sont déclenchés.

Le dispositif de chauffage décrit est intéressant et avantageux à plusieurs titres :
- il permet d'éviter la distribution d'eau tant que celle-ci n'a pas atteint la température désirée.
- il diminue le temps d'attente avant de pouvoir utiliser de l'eau chaude car il réduit le débit d'eau à chauffer tant que la température nominale n'est pas atteinte.
- l'eau d'une température inférieure à celle d'utilisation désirée est recyclée à l'entrée de la pompe en mélange avec de l'eau froide, ce qui réduit l'entartrage.
- le dispositif de régulation du débit et de recyclage est entièrement mécanique, facile à réaliser et n'utilise qu'un seul élément thermostatique pour le réglage du débit d'eau froide et pour le recyclage de l'eau insuffisamment chaude pour l'utilisation. Il est simple à réaliser, à utiliser et peu coûteux et sa précision de fonctionnement est grande.

Comme on l'a vu précédemment, une des caractéristiques essentielles de l'invention réside dans le fait de disposer entre la pompe, le corps de chauffe et le percolateur un dispositif de régulation du débit d'eau froide et de recyclage de l'eau chauffée lorsqu'elle n'atteint pas sa température nominale, ces deux fonctions étant commandées simultanément par un seul élément thermosensible.

Bien entendu, cette double régulation du débit de l'entrée d'eau froide dans le corps de chauffe et de la distribution d'eau au percolateur ou sorr recyclage peut être obtenue, de préférence mécaniquement, mais à l'aide d'un dispositif qui serait réalisé différemment de celui décrit, mais également par une régulation électromécanique ou électronique à partir d'un seul capteur de température de l'eau sortant du corps de chauffe.

La présente invention a également pour objet un procédé de chauffage en continu d'un liquide, généralement de l'eau, à une température constante selon lequel on pompe à partir d'un réservoir d'eau froide ou à température ambiante une quantité d'eau à travers un corps de chauffe présentant une faible inertie thermique pour délivrer de l'eau chaude à une température déterminée à une sortie d'utilisation, par exemple un percolateur. Ce procédé se distingue par le fait qu'en fonction de la température de l'eau sortant du corps de chauffe on régule d'une part le débit d'eau froide délivré au corps de chauffe et d'autre part le taux de recyclage d'eau chaude vers l'admission de la pompe. Selon ce procédé, l'eau n'est délivrée à la sortie d'utilisation que lorsqu'elle atteint sa température nominale et que l'eau chaude atteint une pression déterminée. Un seul capteur de température commande la régulation du débit d'eau froide et simultanément le taux de recyclage de l'eau chaude.

Par ce procédé, au début du chauffage de l'eau, on ne délivre qu'un faible débit d'eau au corps de chauffe, ce qui permet un chauffage rapide de l'eau et tant que l'eau n'a pas atteint une température d'utilisation minimum, cette eau est recyclée vers l'entrée de la pompe. Ce n'est que lorsque la température de l'eau sortant du corps de chauffe atteint sa valeur nominale que l'eau n'est plus recyclée, provoquant sa montée en pression et sa distribution à la sortie d'utilisation d'eau chaude. Simultanément, le débit d'eau froide délivré au corps de chauffe augmente.

Si l'eau chaude dépasse la température nominale fixée, le débit d'eau froide délivré au corps de chauffe augmente encore, provoquant ainsi une chute de température de l'eau sortant du corps de chauffe.

Par ce procédé, on obtient une réduction du temps de chauffage nécessaire à porter la température de l'eau sortant du corps de chauffe à sa valeur nominale, on évite de délivrer de l'eau à la sortie d'utilisation tant que celle-ci n'a pas atteint sa valeur nominale et on régule ensuite la valeur de la température de l'eau distribuée par la régulation du débit de l'eau froide entrant dans le corps de chauffe.

En résumé, on peut retenir que le procédé et le dispositif de chauffage en continu d'un liquide comportent :
A/ La régulation de la température de l'eau en sortie par une régulation du débit de l'eau à la température ambiante contenue dans un réservoir 1 et délivrée par une pompe 2.
   La régulation de débit est réalisée par un dispositif d'ajutage variable 22 piloté par un élément thermosensible 24 placé dans le circuit d'eau chaude sortant d'un corps de chauffe 3.
   Le corps de chauffe 3 peut être de puissance constante et adaptée au débit d'eau souhaité, sans besoin d'une grande capacité calorifique ni d'une grande inertie thermique.
   Son temps de préchauffe sera donc minimum et le coût de ces corps de chauffe produits en très grandes séries est faible.
   La régulation du débit d'eau froide permet de limiter le phénomène d'entartrage, important et délicat à résoudre dans les circuits d'eau à température élevée.
   La régulation de débit est réalisée par variation de la section de passage de l'eau, soit progressivement en fonction du déplacement provoqué par l'élément thermostatique, soit par étapes.
   Le débit de l'eau est très inférieur à celui pouvant être porté à la température désirée compte tenu de la puissance de chauffe, tant que la température de consigne n'est pas atteinte.
   Aux environs de la température de consigne, le débit est proche du débit nominal fixé par la puissance de chauffe.
   Lorsque la température dépasse la température de consigne, le débit devient très supérieur au débit nominal.
B/ Le recyclage de l'eau chaude vers une bâche, ou dans le réservoir, ou vers l'aspiration de la pompe et ce, tant que la température de consigne n'est pas atteinte.

Le dispositif de recyclage est piloté par le même élément thermosensible, dans un objectif de coût minimal.

Dans le cas de recyclage à l'aspiration de la pompe, un mélange eau chaude - eau froide permet de limiter les risques d'entartrage de la pompe.

De plus, le dispositif de régulation de débit et de recyclage est réalisé de préférence en deux parties :
une partie froide 7a contenant le régulateur de débit et pouvant être réalisée en matériaux plastiques
une partie chaude 7b contenant l'élément thermosensible, le recyclage et le corps de chauffe, réalisée en matériau de bonne conductibilité thermique, par exemple en alliage d'aluminium.
les deux parties sont isolées thermiquement

Cette construction permet une grande compacité, une masse des pièces minimum et un volume d'eau très faible, ce qui donne une préchauffe très rapide.

La préchauffe de la partie chaude est contrôlée par un élément thermostatique 29 mécanique ou électronique.

Lorsque la température de préchauffe est atteinte, l'élément thermostatique 29 commande la mise en marche de la pompe de manière automatique ou informe l'utilisateur que la préchauffe est terminée.

On obtient ainsi le fonctionnement suivant :
L'eau contenue dans le réservoir 1 est aspirée par la pompe 2 et introduite en 8 dans le régulateur de débit 22.
L'eau, dont le débit est fonction de la position de la tige de commande 16, elle-même déplacée par la course de l'élément thermostatique 24, sort du régulateur de débit en 9 pour aller en 10 dans le corps de chauffe 3.
L'eau ressort chaude en 11 et entre en 12 dans la partie chaude 7b du régulateur pour sensibiliser l'élément thermostatique 24.
L'eau ressort en 14 vers l'aspiration de la pompe 2 tant que le dispositif de recyclage 28 n'est pas fermé par le déplacement de la tige 16.

Lorsque la température de consigne est atteinte, l'élément thermostatique 24 commence à déplacer la tige 16 et ferme le dispositif de recyclage 28.

L'eau sort alors en 13 à travers une soupape 4 vers la tête de percolation 15.

Dans la forme d'exécution illustrée, le dispositif de régulation du débit d'eau froide entrant dans le corps de chauffe et le dispositif de recyclage de l'eau sortant du corps de chauffe tant que sa température n'atteint pas une valeur de consigne minimale sont regroupés constructivement en un seul ensemble commandé par un seul élément thermosensible. Ceci est avantageux du point de vue constructif, coût et encombrement.

Dans une variante toutefois, ces deux dispositifs de régulation du débit d'eau froide et de recyclage de l'eau sortant du corps de chauffe vers le réservoir, l'entrée de la pompe ou dans une bâche pourraient être distincts. La commande de ces dispositifs par la température de l'eau sortant du corps de chauffe s'effectue de préférence à l'aide d'un seul élément thermosensible mais en variante chaque dispositif pourrait être commandé par un capteur séparé.

## Revendications

1. Dispositif de chauffage en continu d'un liquide à une température constante, notamment pour des applications ménagères et plus particulièrement la préparation de café, comportant un réservoir d'eau (1) à température ambiante, une pompe (2), un corps de chauffe (3) dont l'alimentation électrique est commandée par un interrupteur, une sortie d'utilisation du liquide (15) à la température désirée et une soupape tarée sur sa sortie d'utilisation du liquide **caractérisé par le fait qu'**il comporte un dispositif de régulation du débit (7a) d'eau froide délivré par la pompe (2) au corps de chauffe (3) piloté par la température du liquide sortant du corps de chauffe ainsi qu'un dispositif de recyclage (7b) de l'eau sortant du corps de chauffe (3) vers le réservoir (1) ou l'admission de la pompe (2) tant que celle-ci n'atteint pas une température minimum de fonctionnement préétablie, dispositif de recyclage (7b) également piloté par la température de l'eau sortant du corps de chauffe (3).

2. Dispositif selon la revendication 1, **caractérisé par le fait que** le dispositif de régulation du débit d'eau froide délivré au corps de chauffe et le dispositif de recyclage sont groupés en un seul ensemble commandé par un seul élément thermostatique réagissant à la température de l'eau sortant du corps de chauffe.

3. Dispositif selon la revendication 2, **caractérisé par le fait que** l'ensemble de régulation du débit d'eau froide et de recyclage comporte une partie froide formée d'un corps comportant une entrée d'eau provenant de la pompe et une sortie d'eau alimentant le corps de chauffe, partie froide à l'intérieur de laquelle est agencé un ajutage permettant de modifier le débit d'eau froide délivré audit corps de chauffe.

4. Dispositif selon la revendication 3, **caractérisé par le fait que** l'ensemble de régulation du débit et de recyclage comporte une partie chaude comportant un corps coaxial et solidaire du corps de ladite partie froide mais isolé thermiquement par rapport à celle-ci, cette partie chaude comportant une entrée alimentée par l'eau sortant du corps de chauffe alimentant une chambre située dans le corps de la partie chaude, cette chambre étant en communication directe avec la sortie d'utilisation du dispositif muni de sa soupape et étant relié par l'intermédiaire d'un ajutage d'obturation à une sortie de recyclage d'eau reliée au réservoir ou à l'entrée de la pompe; et **par le fait que** l'élément thermostatique de commande des ajutages est situé dans cette chambre de la partie chaude de l'ensemble.

5. Dispositif selon la revendication 4, **caractérisé par le fait que** l'ensemble régulateur de débit-recycleur comporte une tige munie d'une tête de plus grand diamètre, cette tige coulissant dans un alésage du corps de la partie froide de l'ensemble tandis que la tête de la tige coulisse dans un alésage du corps de la partie chaude de l'ensemble; **par le fait que** l'élément thermostatique, situé dans la chambre du corps de la partie chaude de l'ensemble, est fixé au corps de cette partie chaude tandis que le piston mobile de l'élément thermostatique dont la position axiale dépend de la température de l'eau située dans la chambre actionne axialement la tige contre l'action d'un ressort de rappel.

6. Dispositif selon la revendication 5, **caractérisé par le fait que** le corps de la partie froide de l'ensemble comporte une chambre d'entrée reliée à l'admission d'eau froide provenant de la pompe et une chambre de sortie reliée à la sortie alimentant le corps de chauffe et **par le fait que** l'ajutage de régulation du débit d'eau froide est constitué par une fente radiale débouchant sur la périphérie de la tige, fente de section variable en direction de l'axe longitudinal de la tige, cette fente permettant, suivant la position axiale de la tige, de relier la chambre d'entrée à la chambre de sortie avec un passage de section différente et **par le fait qu'**en position de repos de la tige ladite section de passage est minimum.

7. Dispositif selon la revendication 6, **caractérisé par le fait que** des joints d'étanchéité sont prévus entre le corps de la partie froide de l'ensemble et la tige entre les deux chambres et de part et d'autre de celles-ci.

8. Dispositif selon l'une des revendications 4 à 7, **caractérisé par le fait que** la tête de la tige comporte une fraisure radiale débouchant sur sa périphérie sur une partie de sa longueur reliant la chambre du corps de la partie chaude de l'ensemble à la sortie de recyclage ou non suivant la position axiale de la tête de la tige dans ledit corps de la partie chaude de l'ensemble.

9. Dispositif selon la revendication 8, **caractérisé par** le-fait qu'un joint d'étanchéité est prévu entre la tête de la tige et le corps de la partie chaude de l'ensemble, joint situé entre la chambre et la sortie de recyclage.

10. Dispositif selon l'une des revendications précédentes, **caractérisé par le fait que** qu'il comporte un capteur de température monté sur le corps du dispositif de recyclage et commandant l'alimentation électrique de la pompe.

11. Dispositif selon l'une des revendications précédentes, **caractérisé par le fait que** la sortie d'eau chaude d'utilisation est constituée par un percolateur.

12. Dispositif selon l'une des revendications précédentes, **caractérisé par le fait que** l'élément thermostatique est du type à cartouche à cire, à vaporisation de liquide, à base de métal à mémoire de forme ou à base de métaux à forte dilatation propre à produire un déplacement axial d'un piston.

13. Dispositif selon l'une des revendications précédentes, **caractérisé par le fait que** le corps de chauffe présente une faible inertie thermique.

14. Dispositif selon l'une des revendications 3 à 13, **caractérisé par le fait que** la section de passage de l'ajutage régulant le débit d'eau froide délivré au corps de chauffe varie en continu ou par paliers .

15. Procédé de chauffage en continu d'un liquide, notamment de l'eau, à température constante selon lequel on pompe à partir d'un réservoir (1) d'eau froide une quantité d'eau à travers un corps de chauffe (3) présentant une faible inertie thermique pour délivrer de l'eau chaude à une température déterminée à une sortie d'utilisation (15), **caractérisé par le fait qu'**en fonction de la température de l'eau sortant du corps de chauffe on régule d'une part le débit d'eau froide délivré au corps de chauffe (3) et d'autre part le taux de recyclage d'eau chaude vers l'admission de la pompe (2) ou le réservoir (1).

16. Procédé selon la revendication 15, **caractérisé par le fait qu'**on ne délivre l'eau chauffée à la sortie d'utilisation que lorsqu'elle a atteint une température prédéterminée et que cette eau chaude atteint une pression déterminée.

17. Procédé selon l'une des revendications 15 ou 16, **caractérisé par le fait que** le débit d'eau froide est réglé à une valeur très inférieure à celle pouvant être portée à la température désirée compte tenu de la puissance du corps de chauffe tant que la température de consigne n'est pas atteinte.

18. Procédé selon la revendication 17, **caractérisé par le fait que** lorsque la température de l'eau sortant du corps de chauffe dépasse la température de consigne le débit d'eau froide alimentant ce corps de chauffe devient supérieur au débit nominal.

19. Procédé selon l'une des revendications 15 à 18, **caractérisé par le fait que** l'eau chaude sortant du corps de chauffe est recyclée vers le réservoir ou l'entrée de la pompe tant que la température de consigne de l'eau chaude d'utilisation n'est pas atteinte.

20. Procédé selon l'une des revendications 15 à 19, **caractérisé par le fait que** le recyclage de l'eau est commandé par le même élément thermosensible que celui régulant le débit d'eau froide.

## Patentansprüche

1. Vorrichtung zum kontinuierlichen Erhitzen einer Flüssigkeit auf eine konstante Temperatur insbesondere zu Haushaltszwecken und vor allem für die Kaffeezubereitung, umfassend einen Behälter (1) für Wasser mit Raumtemperatur, eine Pumpe (2), einen Heizkörper (3), dessen Stromversorgung durch einen Schalter gesteuert wird, einen Nutzaustritt (15) für die Flüssigkeit mit der gewünschten Temperatur und ein vorgespanntes Ventil im Nutzaustritt der Flüssigkeit, **dadurch gekennzeichnet, dass** sie eine Vorrichtung (7a) zur Regulierung des von der Pumpe (2) dem Heizkörper (3) gelieferten Kaltwasserdurchsatzes aufweist, der durch die Temperatur der aus dem Heizkörper austretenden Flüssigkeit gesteuert wird, sowie eine Vorrichtung (7b) zur Rezyklierung des aus dem Heizkörper (3) austretenden Wassers zum Behälter (1) oder zum Einlass der Pumpe (2), solange dieses nicht eine voreingestellte Mindestbetriebstemperatur erreicht, wobei diese Rezyklierungsvorrichtung (7b) ebenfalls durch die Temperatur des aus dem Heizkörper (3) austretenden Wassers gesteuert wird.

2. Vorrichtung nach Anspruch 1, **dadurch gekennzeichnet, dass** die Vorrichtung zur Regulierung des dem Heizkörper gelieferten Kaltwasserdurchsatzes und die Rezyklierungsvorrichtung in einer Einheit zusammengefasst sind, die durch ein einziges Thermostatelement gesteuert wird, das auf die Temperatur des aus dem Heizkörper austretenden Wassers anspricht.

3. Vorrichtung nach Anspruch 2, **dadurch gekennzeichnet, dass** die Einheit zur Regulierung des Kaltwasserdurchsatzes und zur Rezyklierung einen kalten Teil aufweist, der von einem Körper gebildet ist, der einen Eintritt für das von der Pumpe kommende Wasser und einen Austritt für das den Heizkörper versorgende Wasser aufweist und in dessen Innerem eine Düse vorgesehen ist, die die Änderung des dem Heizkörper gelieferten Kaltwasserdurchsatzes gestattet.

4. Vorrichtung nach Anspruch 3, **dadurch gekennzeichnet, dass** die Einheit zur Regulierung des Durchsatzes und zur Rezyklierung einen heißen Teil aufweist, der einen Körper aufweist, der koaxial und mit dem Körper des kalten Teils fest verbunden ist, jedoch gegenüber diesem thermisch isoliert ist, wobei dieser heiße Teil einen Eintritt aufweist, der mit dem aus dem Heizkörper austretenden Wasser versorgt wird, das eine im Körper des heißen Teils gelegene Kammer versorgt, die mit dem Nutzaustritt der mit ihrem Ventil ausgerüsteten Vorrichtung in direkter Verbindung ist und über eine Absperrdüse mit einem Kaltwasserrezyklierungsaustritt verbunden ist, der mit dem Behälter oder mit dem Eintritt der Pumpe verbunden ist, und dass das Thermostatelement zur Steuerung der Düsen in dieser Kammer des heißen Teils der Einheit angeordnet ist.

5. Vorrichtung nach Anspruch 4, **dadurch gekennzeichnet, dass** die Durchsatzregulierungs- und Rezyklierungseinheit eine Stange aufweist, die mit einem Kopf mit einem größeren Durchmesser versehen ist und in einer Bohrung des Körpers des kalten Teils der Einheit gleitet, während der Kopf der Stange in einer Bohrung des Körpers des heißen Teils der Einheit gleitet, und dass das in der Kammer des Körpers des heißen Teils der Einheit angeordnete Thermostatelement am Körper dieses heißen Teils befestigt ist, während der bewegliche Kolben des Thermostatelements, dessen axiale Stellung von der Temperatur des in der Kammer befindlichen Wassers abhängt, die Stange entgegen der Einwirkung einer Rückholfeder axial betätigt.

6. Vorrichtung nach Anspruch 5, **dadurch gekennzeichnet, dass** der Körper des kalten Teils der Einheit eine Eintrittskammer, die mit dem Einlass des von der Pumpe kommenden Kaltwassers verbunden ist, und eine Austrittskammer aufweist, die mit dem den Heizkörper versorgenden Austritt verbunden ist, und dass die Düse zur Regulierung des Kaltwasserdurchsatzes aus einem radialen Spalt besteht, der am Umfang der Stange ausmündet und der einen in Richtung der Längsachse der Stange sich ändernden Querschnitt aufweist, wobei dieser Spalt je nach der axialen Stellung der Stange gestattet, die Eintrittskammer mit der Austrittskammer mit einem Durchgang mit anderem Querschnitt zu verbinden, und dass der Durchgangsquerschnitt in der Ruhestellung der Stange minimal ist.

7. Vorrichtung nach Anspruch 6, **dadurch gekennzeichnet, dass** zwischen dem Körper des kalten Teils der Einheit und der Stange zwischen den beiden Kammern und zu beiden Seiten von diesen Dichtringe vorgesehen sind.

8. Vorrichtung nach einem der Ansprüche 4 bis 7, **dadurch gekennzeichnet, dass** der Kopf der Stange eine radiale Fräsung aufweist, die auf ihrem Umfang auf einem Teil ihrer Länge ausmündet und die Kammer des Körpers des heißen Teils der Einheit mit dem Rezyklierungsaustritt je nach der axialen Stellung des Kopfs der Stange in diesem Körper des heißen Teils der Einheit verbindet oder nicht.

9. Vorrichtung nach Anspruch 8, **dadurch gekennzeichnet, dass** zwischen dem Kopf der Stange und dem Körper des heißen Teils der Einheit ein Dichtring vorgesehen ist, der zwischen der Kammer und dem Rezyklierungsaustritt angeordnet ist.

10. Vorrichtung nach einem der vorhergehenden Ansprüche, **dadurch gekennzeichnet, dass** sie einen Temperaturfühler aufweist, der auf dem Körper der Rezyklierungsvorrichtung montiert ist und die Stromversorgung der Pumpe steuert.

11. Vorrichtung nach einem der vorhergehenden Ansprüche, **dadurch gekennzeichnet, dass** der Heißwasser-Nutzaustritt aus einem Perkolator besteht.

12. Vorrichtung nach einem der vorhergehenden Ansprüche, **dadurch gekennzeichnet, dass** das Thermostatelement ein Wachskartuschen- oder Flüssigkeitsverdampfungs-Element ist oder auf einem Formspeicherungsmetall oder auf Metallen mit starker Ausdehnung beruht, wodurch eine axiale Bewegung eines Kolbens erzeugt werden kann.

13. Vorrichtung nach einem der vorhergehenden Ansprüche, **dadurch gekennzeichnet, dass** der Heizkörper eine geringe thermische Trägheit besitzt.

14. Vorrichtung nach einem der Ansprüche 3 bis 13, **dadurch gekennzeichnet, dass** der Durchgangsquerschnitt der Düse, die den dem Heizkörper gelieferten Kaltwasserdurchsatz reguliert, sich kontinuierlich oder stufenweise ändert.

15. Verfahren zum kontinuierlichen Erhitzen einer Flüssigkeit, insbesondere Wasser, auf eine konstante Temperatur, bei welchem man aus einem Kaltwasserbehälter (1) eine Wassermenge durch einen Heizkörper (3) mit geringer thermischer Trägheit pumpt, um einem Nutzaustritt (15) Wasser mit einer bestimmten Temperatur liefern, **dadurch gekennzeichnet, dass** man einerseits den dem Heizkörper (3) gelieferten Kaltwasserdurchsatz und andererseits das Verhältnis der Heißwasserrezyklierung zum Einlass der Pumpe (2) oder zum Behälter (1) in Abhängigkeit von der Temperatur des aus dem Heizkörper austretenden Wassers reguliert.

16. Verfahren nach Anspruch 15, **dadurch gekennzeichnet, dass** man das erhitzte Wasser erst dann dem Nutzaustritt liefert, wenn es eine zuvor festgelegte Temperatur erreicht hat und wenn dieses Heißwasser einen bestimmten Druck erreicht.

17. Verfahren nach einem der Ansprüche 15 oder 16, **dadurch gekennzeichnet, dass** der Kaltwasserdurchsatz auf einen Wert eingestellt wird, der viel kleiner als derjenige ist, der angesichts der Leistung des Heizkörpers auf die gewünschte Temperatur gebracht werden kann, solange die Solltemperatur nicht erreicht ist.

18. Verfahren nach Anspruch 17, **dadurch gekennzeichnet, dass**, wenn die Temperatur des aus dem Heizkörper austretenden Wassers die Solltemperatur überschreitet, der diesen Heizkörper versorgende Kaltwasserdurchsatz größer als der Nenndurchsatz wird.

19. Verfahren nach einem der Ansprüche 15 bis 18, **dadurch gekennzeichnet, dass** das aus dem Heizkörper austretende Heißwasser zum Behälter oder zum Eintritt der Pumpe rezykliert wird, solange die Solltemperatur des heißen Brauchwassers nicht erreicht ist.

20. Verfahren nach einem der Ansprüche 15 bis 19, **dadurch gekennzeichnet, dass** die Rezyklierung des Wassers durch dasselbe thermosensible Element wie dasjenige, das den Kaltwasserdurchsatz steuert, gesteuert wird.

## Claims

1. Device for continuously heating a liquid at a constant temperature, particularly for domestic applications and more particularly for the preparation of coffee, comprising a reservoir (1) of water at ambient temperature, a pump (2), a heating body (3) whose electricity supply is controlled by a switch, a dispensing outlet (15) for the liquid at the desired temperature, and a calibrated valve on the liquid dispensing outlet, **characterized in that** it comprises a device (7a) for regulating the flow of cold water delivered by the pump (2) to the heating body (3), controlled by the temperature of the liquid flowing from the heating body, together with a device (7b) for recycling the water flowing from the heating body (3) towards the reservoir (1) or the pump inlet (2) until it reaches a specified minimum operating temperature, the recycling device (7b) also being controlled by the temperature of the water flowing from the heating body (3).

2. Device according to Claim 1, **characterized in that** the device for regulating the flow of cold water delivered to the heating body and the recycling device are grouped in a single unit controlled by a single thermostatic element reacting to the temperature of the water flowing from the heating body.

3. Device according to Claim 2, **characterized in that** the cold water flow regulation and recycling unit comprises a cold section formed by a body comprising an inlet for water supplied by the pump and an outlet for water supplied to the heating body, a nozzle being positioned within the cold section for modifying the flow of cold water delivered to the said heating body.

4. Device according to Claim 3, **characterized in that** the flow regulation and recycling unit comprises a hot section comprising a body which is coaxial with and fixed to the body of the said cold section but thermally insulated from the latter, this hot section comprising an inlet which is supplied with the water flowing from the heating body and supplies a chamber located in the body of the hot section, this chamber being in direct communication with the dispensing outlet of the device provided with its valve and being connected through a shut-off nozzle to a water recycling outlet connected to the reservoir or to the pump inlet; and **in that** the thermostatic element for controlling the nozzles is located in this chamber of the hot section of the unit.

5. Device according to Claim 4, **characterized in that** the flow regulation and recycling unit comprises a rod having a head of larger diameter, this rod sliding in a bore of the body of the cold section of the unit while the head of the rod slides in a bore of the body of the hot section of the unit; and **in that** the thermostatic element, located in the chamber of the body of the hot section of the unit, is fixed to the body of this hot section while the movable piston of the thermostatic element whose axial position depends on the temperature of the water located in the chamber actuates the rod axially against the action of a return spring.

6. Device according to Claim 5, **characterized in that** the body of the cold section of the unit comprises an inlet chamber connected to the inlet for the cold water supplied by the pump and an outlet chamber connected to the outlet supplying the heating body, and **in that** the cold water flow regulation nozzle consists of a radial slot opening on the periphery of the rod, the slot having a variable section in the direction of the longitudinal axis of the rod, this slot enabling the inlet chamber to be connected to the outlet chamber with different passage cross-sections, according to the axial position of the rod, and **in that** the said passage cross-section has a minimum size when the rod is in the resting position.

7. Device according to Claim 6, **characterized in that** sealing joints are provided between the body of the cold section of the unit and the rod, between the two chambers and on each side of them.

8. Device according to any one of Claims 4 to 7, **characterized in that** the head of the rod comprises a radial countersunk hole opening on its periphery over a part of its length, connecting or not connecting the chamber of the body of the hot section of the unit to the recycling outlet according to the axial position of the head of the rod in the said body of the hot section of the unit.

9. Device according to Claim 8, **characterized in that** a sealing joint is provided between the head of the rod and the body of the hot section of the unit, this joint being located between the chamber and the recycling outlet.

10. Device according to any one of the preceding claims, **characterized in that** it comprises a temperature sensor fitted on the body of the recycling device and controlling the electricity supply to the pump.

11. Device according to any one of the preceding claims, **characterized in that** the hot water dispensing outlet consists of a percolator.

12. Device according to any one of the preceding claims, **characterized in that** the thermostatic element is of the liquid vaporization type with a wax cartridge, using shape memory metal or high expansion metals, which can produce an axial movement of a piston.

13. Device according to any one of the preceding claims, **characterized in that** the heating body has a low thermal inertia.

14. Device according to any one of Claims 3 to 13, **characterized in that** the passage cross-section of the nozzle regulating the flow of cold water delivered to the heating body varies continuously or by increments.

15. Method for continuously heating a liquid, particularly water, at a constant temperature, in which a quantity of water is pumped from a cold water reservoir (1) through a heating body (3) having a low thermal inertia, to deliver hot water at a specified temperature to a dispensing outlet (15), **characterized in that** the flow of cold water delivered to the heating body (3), on the one hand, and the rate of recycling of hot water towards the inlet of the pump (2) or the reservoir (1), on the other hand, are regulated as a function of the temperature of the water flowing from the heating body (3).

16. Method according to Claim 15, **characterized in that** the hot water is not delivered to the dispensing outlet until it has reached a specified temperature, and **in that** this hot water reaches a specified pressure.

17. Method according to either of Claims 15 or 16, **characterized in that** the flow of cold water is regulated at a value much lower than that which can be brought to the desired temperature, according to the power of the heating body, until the set temperature has been reached.

18. Method according to Claim 17, **characterized in that**, when the temperature of the water flowing from the heating body exceeds the set temperature, the flow of cold water supplied to this heating body becomes greater than the nominal flow.

19. Method according to any one of Claims 15 to 18, **characterized in that** the hot water flowing from the heating body is recycled towards the reservoir or the pump inlet until the set temperature of the hot water for dispensing has been reached.

20. Method according to any one of Claims 15 to 19, **characterized in that** the water recycling is controlled by the same heat-sensitive element as that which regulates the flow of cold water.
